# EUROPEAN PATENT APPLICATION

(11) **EP 4 383 406 A1**
(43) Date of publication of application: **12.06.2024**
(21) Application number: 21965170.0
(22) Date of filing: 26.11.2021
(51) Int. Cl.: H01M 10/615

(54) **BATTERY CELL HEATING ASSEMBLY, BATTERY MODULE, AND VEHICLE**

(71) Applicant: Contemporary Amperex Technology Co., Limited, Ningde, Fujian 352100 (CN)
(72) Inventor: WANG, Jinlong, Ningde, Fujian 352100 (CN)
(74) Representative: Gong, Jinping
(86) International application number: PCT/CN2021/133375
(87) International publication number: WO 2023/092435

(57) **Abstract**

The present application discloses a cell heating assembly, a battery module and a vehicle. The cell heating assembly includes a substrate and an electric heating circuit. The substrate is provided with Q first supporting parts and P second supporting parts, and each first supporting part is used for supporting one cell; the electric heating circuit includes P electric heaters and a conducting circuit, and the conducting circuit is electrically connected with the P electric heaters; the P electric heaters and the conducting circuit are arranged on the substrate; each second supporting part is used for supporting one electric heater; and at least one electric heater and second supporting part are arranged around each first supporting part. Respective electric heaters can be separately mounted on each second supporting part and electrically connected with each other via the conducting circuit provided on the substrate. In this way, the overall design of the electric heater according to the construction of the substrate can be avoided, thus simplifying the structure of the electric heater, reducing the difficulty of processing the electric heater and improving the versatility of the electric heater.

## Description

### TECHNICAL FIELD

The present application relates to the technical field of batteries, in particular to a cell heating assembly, a battery module and a vehicle.

### BACKGROUND

The working temperature of the battery has a great influence on the working performance of the battery. For example, for lithium batteries and other types of batteries, when they are in a low temperature working environment, using a heating device to heat the batteries is helpful to improve the energy utilization rate and service life of the batteries.

However, in related technologies, the battery heating device is often an overall structure specially designed for a specific battery, and its shape should be adapted to the arrangement of all cells in the battery, which has the problems of poor universality, complex overall structure and high processing difficulty.

### SUMMARY

The present application provides a cell heating assembly, a battery module and a vehicle, to solve the problems of complex structure, poor universality and high processing difficulty of the cell heating device in the related art.

In the first aspect, the present application provides a cell heating assembly, which includes:
a substrate provided with Q first supporting parts and P second supporting parts, each first supporting part being used for supporting one cell;
an electric heating circuit including P electric heaters and a conducting circuit, and the conducting circuit being electrically connected with the P electric heaters; the P electric heaters and the conducting circuit are arranged on the substrate; each second supporting part is used for supporting one electric heater; and at least one electric heater and second supporting part are arranged around each first supporting part; and
P and Q are integers greater than 1.

Embodiments of the present application provide a cell heating assembly, which includes a substrate and an electric heating circuit, the substrate is provided with Q first supporting parts and P second supporting parts, each first supporting part is used for supporting one cell; the electric heating circuit includes P electric heaters and a conducting circuit, each second supporting part is used for supporting one electric heater, and respective electric heaters can be separately mounted on each second supporting part and electrically connected with each other via the conducting circuit provided on the substrate. In this way, the overall complex design of the electric heater according to the construction of the substrate can be avoided, thus simplifying the structure of the electric heater, reducing the difficulty of processing the electric heater and improving the versatility of the electric heater. At the same time, at least one electric heater and second supporting part are arranged around each first supporting part, so that the cells arranged on each first supporting part can be heated by the surrounding electric heaters, and the arrangement position of the electric heaters can be flexibly adjusted according to the arrangement of the cells, and the heating efficiency of the cells can be ensured.

In some embodiments, the conducting circuit is embedded in the substrate, and the conducting circuit passes through the second supporting parts and is electrically connected with the electric heaters.

The conducting circuit is embedded in the substrate, which is helpful to improve the connection reliability between the conducting circuit and the substrate, and at the same time, it also avoids the excessive exposure of the conducting circuit to the outside of the substrate to affect the assembly of the cells and other structures.

In some embodiments, the conducting circuit is a printed circuit board circuit.

The conducting circuit is a printed circuit board circuit, which can improve the strength of the conducting circuit and effectively avoid the damage of the conducting circuit. At the same time, when the conducting circuit is electrically connected with the electric heater by contact, the hard conducting circuit also helps to keep the two in reliable contact.

In some embodiments, the second supporting parts are arc-shaped openings;
the first supporting parts are circular openings; and
the second supporting parts arranged around the first supporting parts are arranged concentrically with the first supporting parts.

The arc-shaped openings can be used to accommodate the electric heaters, and the electric heaters can be arranged opposite to the cell located in the circular openings along with the arc-shaped openings, and the heat generated by the electric heaters can be transferred to the peripheral side of the cell to heat the cell at a high efficiency.

In some embodiments, the circuit includes a first main circuit, a second main circuit and N heating branches, where N is an integer greater than 1; and
the P electric heaters are distributed in the N heating branches, and the N heating branches are connected in parallel between the first main circuit and the second main circuit.

The P point heaters are distributed in the N heating branches, and the N heating branches can be connected in parallel with the first main circuit and the second main circuit, so that when part of the N heating branches are damaged, heating can be carried out through electric heaters connected in other heating branches, thus improving the working reliability of the cell heating assembly. At the same time, providing the N heating branches connected in parallel is also helpful to improve the overall heating efficiency of the cell heating assembly.

In some embodiments, Q first supporting parts are arranged in an array in the substrate with a first gap between any two adjacent first supporting parts, and at least part of P electric heaters are arranged at the first gap.

At least part of the P electric heaters are arranged at the first gap between two adjacent first supporting parts, which is helpful to distribute the electric heaters on the basics evenly, thereby uniformly heating the cells on each first supporting part and improving the heating effect of the cells.

In some embodiments, at least one heating branch extends in a wavy line.

The heating branches of a wave-line shape can meander and extend in each first gap, and the heating branches can be relatively close to the first supporting part as a whole, so that the electric heaters distributed on the heating branches can also be relatively close to the first supporting part, thereby contributing to improving the heating efficiency of the cells.

In some embodiments, the substrate is further provided with at least one air guide hole.

The air guide hole can release the stress of the cell acting on the substrate and ensure the safety of the cell. At the same time, the providing of the air guide hole can also reduce the overall weight of the substrate.

In the second aspect, the present application provides a battery module, which includes: a cell assembly and the cell heating assembly as described in the first aspect, the cell assembly includes Q cells, and the Q cells are arranged on Q first supporting parts of the cell heating assembly.

The battery module provided by this embodiment includes a cell assembly and the above cell heating assembly, the cell assembly includes Q cells, and the Q cells are arranged on Q first supporting parts of the cell heating assembly, so that the cells can be synchronously heated by the surrounding electric heaters, which is helpful to improve the heating efficiency of the cell assembly.

In some embodiments, the cell assembly further includes a bus member for electrically connecting electrodes of the Q cells.

The bus member is provided such that the Q cells can be connected in parallel and/or in series, which is helpful to meet the parameter requirements of power devices for battery modules in various application scenarios.

In some embodiments, the battery module further includes an end cap fixedly connected with the substrate; and
Q first through holes penetrating a first end face and a second end face are provided in the end cap, the electrodes of the Q cells penetrate into the Q first through holes from the first end face and are electrically connected with the bus member fixedly connected to the second end face.

The end cap provides an attachment surface for the bus member, which helps to reduce the difficulty of arranging the bus member. At the same time, the end cap is fixedly connected with the substrate, which is helpful to limit each cell in the corresponding opening and improve the assembly reliability among the cell assembly, the substrate and the end cap.

In some embodiments, P second through holes penetrating the first end face and the second end face are provided in the end cap, and P electric heaters in the cell heating assembly penetrate the P second through holes.

This embodiment enlarges the relative facing surface between the electric heater and the cell, the electric heater can fully heat the peripheral side of the cell, and the heating efficiency of the cell is improved.

In some embodiments, the electric heating circuit of the cell heating assembly is electrically connected at a position between a positive electrode of the cell assembly and a negative electrode of the cell assembly.

In some low temperature applications, the cell assembly in the battery module can heat itself through the electric heating circuit, so that the battery module can work at a more suitable temperature, and the working performance of the battery module can be improved.

In some embodiments, the battery module further includes a case provided with an accommodating cavity, and a cover provided covering the case.

The cell heating assembly and the cell assembly are arranged in the accommodating cavity.

The cover is provided covering the case, which allows the accommodating cavity to become a relatively closed space in order to effectively protect the cell heating assembly and the cell assembly.

In the third aspect, the present application provides a vehicle including: a generator, a starter, and the battery module as described in the second aspect; and
the generator, the starter and an electric heating circuit are connected in parallel between a positive electrode and a negative electrode of a cell assembly of the battery module.

The vehicle provided in this embodiment includes a generator, a starter and a battery module. The generator, the starter and an electric heating circuit are connected in parallel between a positive electrode and a negative electrode of the cell assembly of the battery module. The cell assembly can discharge to the starter to start the vehicle, and when the vehicle is started, the generator can supply power to the cell assembly or heat the cell assembly through the electric heater, so that the cell assembly can work at a suitable temperature, and the working performance of the cell assembly is improved.

In some embodiments, the vehicle further includes a first switch assembly and a second switch assembly, the positive electrode of the cell assembly and a first terminal of the first switch assembly are connected to a first node, the second switch assembly and the electric heating circuit are connected in series at a position between the first node and the negative electrode of the cell assembly, and the generator and the starter are connected in parallel at a position between a second terminal of the first switch assembly and the negative electrode of the cell assembly.

In this embodiment, by providing the first switch assembly and the second switch assembly, it is possible to meet the heating requirements of the cell assembly at different ambient temperatures.

In some embodiments, the vehicle further includes a battery management system electrically connected to the first switch assembly and the second switch assembly.

In the present embodiment, by electrically connecting the BMS to the above-mentioned first and second switch assemblies in order to control the switching status of these switch assemblies, the introduction of additional control modules in the vehicle can be avoided, thereby reducing the cost of vehicle configuration.

### BRIEF DESCRIPTION OF DRAWINGS

In order to more clearly illustrate the technical solutions in embodiments of the present application, the following will briefly introduce the drawings that are desired to be used in the description of the embodiments. Obviously, the drawings in the following description are merely some embodiments of the present application, from which other drawings may be obtained without exerting inventive effort by those ordinarily skilled in the art.
FIG. 1 is a schematic structural diagram of a cell heating assembly according to some embodiments of the present application;
FIG. 2 is a partially enlarged structural schematic diagram of the cell heating assembly according to some embodiments of the present application;
FIG. 3 is a schematic structural diagram of a battery module according to some embodiments of the present application;
FIG. 4 is a schematic structural diagram of an end cap according to some embodiments of the present application;
FIG. 5 is an exploded structural diagram of the battery module according to some embodiments of the present application;
FIG. 6 is a schematic front view of the battery module according to some embodiments of the present application;
FIG. 7 is a schematic top view of the battery module according to some embodiments of the present application;
FIG. 8 is a schematic structural diagram of a vehicle according to some embodiments of the present application; and
FIG. 9 is yet another schematic structural diagram of the vehicle according to some embodiments of the present application.

The reference signs in the specific embodiment are as follows: 100-cell heating assembly, 110-substrate, 111-first supporting part, 112-second supporting part, 120-electric heating circuit, 121-electric heater, 122-conducting circuit, 1221-first main circuit, 1222-second main circuit, 1223-heating branch, 12231-arc-shaped guide, 130-air guide hole, 200-battery module, 210-cell assembly, 211-cell, 220-end cap, 221-first through hole, 222-second through hole, 223-third through hole, 230-bus member, 240-case, 250-cover, 310-generator, 320-starter, 331-first switch assembly, 332-second switch assembly, 340-battery management system.

### DETAILED DESCRIPTION OF EMBODIMENTS

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical and scientific terms used herein have the same meanings as are commonly understood by those skilled in the art of the present application. Terms used herein are for the purpose of describing specific embodiments only and are not intended to limit the present application. The terms "comprising" and "having" and any variations thereof in the description and claims of the present application and the above description of the drawings are intended to cover non-exclusive inclusion.

In the description of embodiments of the present application, the technical terms "first," "second" and the like are used only to distinguish different objects and are not understood to indicate or imply relative importance or to imply the number, specific order or primary and secondary relationship of the indicated technical features. In the description of embodiments of the present application, "plurality" means more than two, unless expressly specified otherwise.

"Embodiments" referred to in the present application means that a particular feature, structure, or characteristic described in connection with embodiments is included in at least one embodiment of the present application. The presence of the phrase in various places in the description does not necessarily mean the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" herein is simply a description of the association relationship of the associated objects, indicating that three relationships can exist, for example, A and/or B may indicate that there are three cases: A exists alone, A and B exist at the same time, and B exists alone. In addition, the character "/" herein generally means that the associated objects before and after it are in an "or" relationship.

In the description of the embodiments of the present application, the term "multiple" refers to more than two (including two). Likewise, "multiple groups" refers to more than two (including two) groups, and "multiple pieces" refers to more than two (including two) pieces.

In the description of the embodiments of the present application, it should be understood that orientation or positional relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings, for ease of description of the embodiments of the present application and simplification of the description only, these terms do not indicate or imply that the apparatus or element referred to must have a specific orientation or be constructed and operated in a specific orientation, and therefore cannot be construed as limitations to the embodiments of the present application.

In the description of the embodiments of the present application, unless otherwise explicitly provided and limited, technical terms such as "mount," "connected," "connect," and "fix" should be understood broadly, which, for example, may refer to a fixed connection, a detachable connection, or an integral connection; which may refer to a mechanical connection or an electrical connection; or the connection can be a directly connection or an indirect connection by intermediate media, and it can be the internal communication of two elements or the interaction between two elements. To a person of ordinary skill in the art, specific meanings of the above terms in the present application may be construed as dependent on specific situations.

Generally speaking, for lithium batteries and other types of batteries, the working environment has a great influence on their working performance. In the case of application of the lithium battery in electric vehicles, when the electric vehicle starts in low temperature environment, if the lithium battery is not preheated, it will probably cause the electric vehicle to fail to start.

Of course, in practical applications, not only lithium batteries, but also other types of batteries, such as sodium ion batteries or magnesium ion batteries, may have heating requirements. In order to simplify the description, the following will mainly be illustrated with the example of a lithium battery.

From the development of market situation, lithium batteries are more and more widely used. Power batteries are not only used in electric vehicles such as electric vehicles, electric bicycles and electric motorcycles, but also widely used in energy storage power systems such as hydraulic power, firepower, wind power and solar power stations, as well as military equipment and aerospace and other fields.

In various application fields, there may be a demand for lithium cell heating. In the research and development, the inventor found that there are certain differences in heating structure and heating efficiency among different forms of lithium batteries.

In the case of cylindrical lithium batteries, for example, a battery module such as a storage battery or power battery may include a plurality of cylindrical lithium batteries connected in parallel and/or in series, each of which may be referred to as a cell.

A commonly used structure for heating the cell in the battery module is that a heating structure is arranged on the axial side of the cell, for example, a heating sheet is pasted on the electrode plate of the cell, etc. However, due to the poor thermal conductivity and large axial length of the cell, the overall heating rate of the cell is low, which makes it difficult to meet the requirements of efficient heating of the cell.

Another commonly used heating structure is to provide a hydrothermal loop in the battery module, which conducts heat to the cell by heating the liquid, so as to realize the heating of the cell. However, due to the setting of hydrothermal loop, the overall structure of battery module is complicated.

In related art, a solution of arranging heating sheets with integral structure on the peripheral side of cylindrical batteries is also put forward. However, these heating sheets with integral structure need to be designed according to the array arrangement mode and arrangement size of batteries, which has poor universality, complex structure and high processing difficulty.

In order to solve the problems existing in the related art, the embodiments of the present application provide a cell heating assembly, a battery module and a vehicle.

The cell heating assembly can be applied to the battery module to heat the cells in the battery module.

The battery module can be applied to electrical devices using batteries as power supply, and the electrical devices can be but are not limited to mobile phones, tablets, notebook computers, electric toys, electric tools, battery cars, electric vehicles, ships, spacecraft and the like. The electric toys may include fixed or mobile electric toys, for example, game machines, electric car toys, electric ship toys, electric plane toys and the like, and the spacecraft may include airplanes, rockets, space shuttles and spaceships and the like.

In the embodiments of the present application, the vehicle may be an electric vehicle to which the above battery module is applied, in particular, the vehicle can be an electric vehicle, a hybrid vehicle or other types of vehicles to which the above battery module is applied, which is not limited hereto.

The cell heating assembly provided by the embodiments of the present application will first be described below.

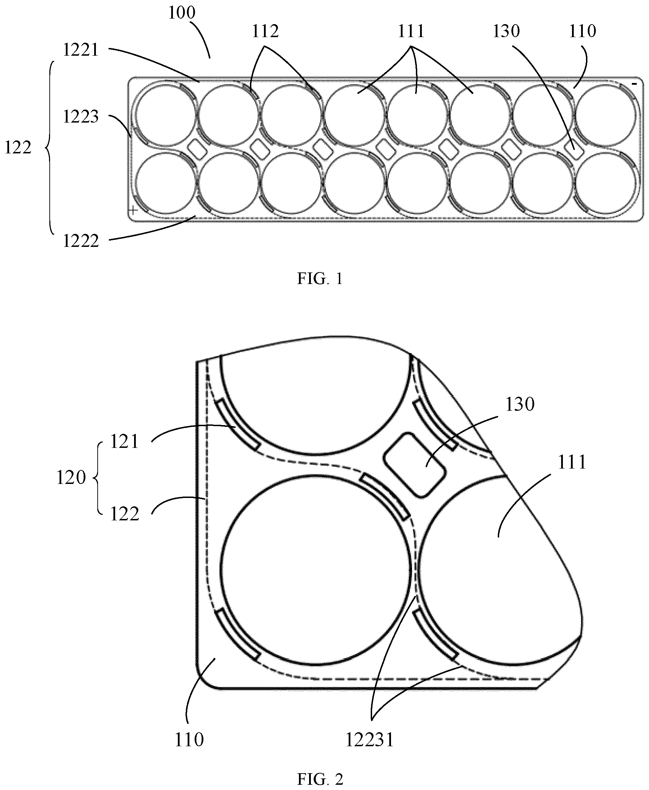

As shown in FIGS. 1 and 2, a cell heating assembly 100 provided by the embodiments of the present application includes a substrate 110 and an electric heating circuit 120.

The substrate 110 is provided with Q first supporting parts 111 and P second supporting parts 112, and each first supporting part 111 is used for supporting one cell 211. The electric heating circuit 120 includes P electric heaters 121 and a conducting circuit 122, and the conducting circuit 122 is electrically connected with the P electric heaters 121. The P electric heaters 121 and the conducting circuit 122 are arranged on the substrate 110. Each second supporting part 112 is used for supporting one electric heater 121. At least one electric heater 121 and second supporting part 112 are provided around each of the first supporting parts 111.

P and Q are integers greater than 1.

The substrate 110 may be a structure for supporting the cell 211 and the electric heating circuit 120. For example, the substrate 110 may have a certain stiffness so as to support and fix the cell 211 and the electric heating circuit 120, and at the same time, the substrate 110 may have a good ability to resist deformation when being pressed and impacted.

In some examples, the substrate 110 may be made of an insulating material and have certain thermal conductivity, and the substrate 110 may conduct heat generated on the electric heater 121 to the cell 211 during the operation of the electric heating circuit 120. Of course, in other examples, the substrate 110 may also include a conductive material to avoid interference with the operation of the cell 211.

The substrate 110 is provided with Q first supporting parts 111 and P second supporting parts 112, where the first supporting parts 111 and the second supporting parts 112 may be at least one of the structures such as openings, slots and supports. In other words, the number of the first supporting parts 111 is plural, and the configurations of the first supporting parts 111 may be the same or different. Similarly, the number of the second supporting parts 112 is plural, and the configurations of the second supporting parts 112 may be the same or different. The specific configuration between the first supporting part 111 and the second supporting part 112 may be the same or different.

Each of the first supporting parts 111 is used to support one cell 211. In some examples, the cell 211 may be a lithium ion battery, a lithium sulfur battery, a sodium ion battery, a magnesium ion battery and the like and is not specifically limited herein. As for the shape of the cell 211, it can be cylindrical, rectangular or other shapes, etc.

In order to simplify the description, the following will mainly be illustrated with the example that the cell 211 is in a cylindrical shape.

As described above, the first supporting part 111 may be an opening or a slot, and the support form of the first supporting part 111 to the cell 211 may be embodied in the fact that the cells 211 are fixed in these openings or slots, and the specific fixing modes may be embedding, bonding or other modes.

When the first supporting part 111 is a support, the support form of the first supporting part 111 to the cell 211 may be embodied in fixing the cell 211 to the support by clamping, bonding or other means.

The electric heating circuit 120 may be an electric circuit for heating the cell 211. The electric heater 121 in the electric heating circuit 120 may be a conductive element having a high resistance, and when the conductive element is connected to a power supply, the electric energy can be converted into heat energy, thereby heating the cell 211. The power supply may be the cell 211 supported by the first supporting part 111 or an external power source, which is not specifically limited here.

The electric heating circuit 120 may include P electric heaters 121, that is, the number of electric heaters 121 may be plural. The conducting circuit 122 can be used to electrically connect different electric heaters 121 or to electrically connect the electric heaters 121 with the above-mentioned power supply.

The above-mentioned P electric heaters 121 may be connected in parallel and/or in series through guide lines, and the specific connection modes may be arranged as required, and examples will not be given here.

In some examples, the conducting circuit 122 may be a flexible wire or a hard conductive structure.

Both the conducting circuit 122 and the electric heaters 121 are provided on the substrate 110. The electric heater 121 may be provided on the second supporting part 112, and the connection mode between the electric heater 121 and the second supporting part 112 may be similar to the connection mode between the cell 211 and the first supporting part 111, which will not be described here.

In some examples, the conducting circuit 122 may be bonded to the substrate 110, for example, if the conducting circuit 122 is a flexible wire, it may be bonded to the surface of the substrate 110.

In other examples, the conducting circuit 122 may be provided in the substrate 110, for example, the second supporting part 112 described above may be an opening, the conducting circuit 122 may be injection molded in the substrate 110, and may be electrically connected with the electric heater 121 inserted into the second supporting part 112.

Of course, the above is an example of the connection mode between the conducting circuit 122 and the substrate 110. In practical applications, the connection mode between the conducting circuit and the substrate can be selected according to the need, and no specific limitation is required here.

At least one electric heater 121 and second supporting part 112 are provided around each of the first supporting parts 111.

The P electric heaters 121 may be disposed on the P second supporting parts 112, and at least one electric heater 121 is disposed around one first supporting part 111, and it may be considered that at least one second supporting part 112 is correspondingly disposed around the first supporting part 111.

Combined with some examples, the first supporting parts 111 and the second supporting parts 112 may be supports, a plurality of second supporting parts 112 are arranged around one first supporting part 111, and the plurality of second supporting parts 112 are arranged around the first supporting part 111, then a plurality of electric heaters 121 arranged on the plurality of second supporting parts 112 may surround the cell 211 arranged on the first supporting part 111 and heat the cell 211 at different angular positions in the circumferential direction of the cell 211.

In other examples, the first supporting parts 111 and the second supporting parts 112 may also be openings, one second supporting part 112 may be disposed on a radial side of the first supporting part 111, or a plurality of second supporting parts 112 may be disposed around the first supporting part 111.

In a practical application, when the electric heaters 121 are turned on to generate heat, the heat can be transferred to the cells 211 provided on the surrounding first supporting parts 111 by heat conduction or heat convection.

The cell heating assembly 100 provided by the embodiments of the present application includes a substrate 110 and an electric heating circuit 120, the substrate 110 is provided with Q first supporting parts 111 and P second supporting parts 112, each first supporting part 111 is used for supporting one cell 211, the electric heating circuit 120 includes P heaters and a conducting circuit 122, each second supporting part 112 is used for supporting one electric heater 121, respective electric heaters 121 can be separately installed on each second supporting part 112 and electrically connected with each other through the conducting circuit 122 arranged on the substrate 110. In this way, the overall complex design of the electric heater 121 according to the construction of the substrate 110 can be avoided, thus simplifying the structure of the electric heater 121, reducing the difficulty of processing the electric heater 121 and improving the versatility of the electric heater 121. At the same time, at least one electric heater 121 and second supporting part 112 are arranged around each first supporting part 111, so that the cells 211 arranged on each first supporting part 111 can be heated by the surrounding electric heater 121, so that the arrangement position of the electric heaters 121 can be flexibly adjusted according to the arrangement mode of the cells 211, and the heating efficiency of the cells 211 can be ensured.

According to some embodiments of the present application, the conducting circuit 122 is embedded in the substrate 110, and the conducting circuit 122 passes through the second supporting parts 112 and is electrically connected to the electric heaters 121.

The conducting circuit 122 is embedded in the substrate 110 and may be fixed in an opening formed in advance in the substrate 110. Alternatively, the substrate 110 described above may be cast or injection molded, and the conducting circuit 122 may be fixed in the substrate 110 when the substrate 110 is molded.

The conducting circuit 122 may pass through the second supporting part 112, for example, the second supporting part 112 may be an opening provided on the substrate 110, and the conducting circuit 122 may penetrate the inner wall of the opening. For another example, the second supporting part 112 may be a support, and the conducting circuit 122 may penetrate through the support.

The conducting circuit 122 is electrically connected to the electric heater 121 through the second supporting part 112, and the electric connection between the conducting circuit and the electric heater may be in contact connection or through various forms of interface connection or the like.

In this embodiment, the conducting circuit 122 is embedded in the substrate 110, which helps to improve the reliability of the connection between the conducting circuit 122 and the substrate 110, and also prevents the conducting circuit 122 from being excessively exposed to the outside of the substrate 110 and affecting the assembly of the cells 211 and other structures.

According to some embodiments of the present application, the conducting circuit 122 is a Printed Circuit Board (PCB) circuit.

PCB can be considered as a hard conductive structure. For example, the PCB may include an insulating backplane and conducting circuit fixed in the hard insulating backplane, and the conducting circuit penetrates at least one surface of the insulating backplane and form a plurality of contacts that can be used for electrical connection.

For example, when two electric heaters 121 are respectively in contact with two contacts on one PCB, the PCB may electrically connect the two electric heaters 121. Of course, in practical applications, the PCB may also be used to connect the electric heaters 121 to a power supply and the like, and examples will not be given here.

In this embodiment, the conducting circuit 122 is a PCB, which can improve the strength of the conducting circuit 122 and effectively avoid damage to the conducting circuit 122. At the same time, when the conducting circuit 122 is electrically connected to the electric heaters 121 by means of contact or welding, the hard conducting circuit 122 also helps to keep the two in reliable contact.

According to some embodiments of the present application, as shown in FIGS. 1 and 2, the second supporting parts 112 are arc-shaped openings. The first supporting parts 111 are circular openings. The second supporting parts 112 arranged around the first supporting parts 111 are arranged concentrically with the first supporting parts 111.

In some examples, the second supporting parts 112 and the first supporting parts 111 described above may be openings provided on the end face of the substrate 110, and these openings may be blind holes, through holes, or both.

In other examples, the first supporting parts 111 and the second supporting parts 112 may be provided on the same end face. Alternatively, the first supporting parts 111 may be provided on one end face, and the second supporting parts 112 may be provided on another end face opposite to the end face.

The first supporting parts 111 are circular openings and can be used to accommodate the cells 211 of a cylindrical shape. In some examples, the cells 211 may be embedded in the circular openings or bonded to the inner wall of the circular openings or the like.

The second supporting parts 112 are arc-shaped openings provided around one circular opening and may be arranged concentrically with the circular opening.

The arc-shaped opening may be used to accommodate the electric heater 121, and the electric heater 121 may be arranged opposite to the cell 211 located in the circular opening along with the arc-shaped opening, and heat generated by the electric heater 121 may be transferred to the peripheral side of the cell 211 to heat the cell 211 at a high efficiency.

In some examples, the first supporting part 111 and the second supporting part 112 surrounding it may be isolated from each other or may be in communication with each other. When the first supporting part 111 and the second supporting part 112 are isolated from each other, the heat generated by the electric heater 121 can be conducted to the cell 211 through the substrate 110. When the first supporting part 111 and the second supporting part 112 communicate with each other, the heat generated by the electric heater 121 can be transferred to the cell 211 by direct conduction or heat convection.

The shapes and relative positions of the first supporting part 111 and the second supporting part 112 in this embodiment is designed such that the electric heater 121 and the cell 211 can also have a relatively large opposite face, thereby enabling the heat generated on the electric heater 121 to be efficiently transferred to the cell 211.

The conducting circuit 122 includes a first main circuit 1221, a second main circuit 1222 and N heating branches 1223, where N is an integer greater than 1.

P electric heaters 121 are distributed in N heating branches 1223. The N heating branches 1223 are connected in parallel at a position between the first main circuit 1221 and the second main circuit 1222.

The first main circuit 1221 and the second main circuit 1222 may be regarded as the main circuits connected to the power supply. In conjunction with the above examples, in practical application, the power supply may be a cell 211 provided on the first supporting part 111 or an external power supply, which is not specifically limited here.

The conducting circuit 122 includes N heating branches 1223, and the P electric heaters 121 are distributed in the N heating branches 1223.

As described above, both the conducting circuit 122 and the electric heaters 121 may be provided on the substrate 110, and the electric heaters 121 are electrically connected to the conducting circuit 122. In this embodiment, the heating branches 1223 may be a wire or a PCB provided on the substrate 110.

For example, one heating branch 1223 may include a plurality of PCBs so as to electrically connect the electric heater 121 allocated in the heating branch 1223 to the first main circuit 1221 and the second main circuit 1222.

In other words, the P electric heaters 121 are distributed on the N heating branches 1223, and it can be considered that at least one electric heater 121 may be electrically connected to each heating branch 1223.

In some examples, when a plurality of electric heaters 121 are distributed on one heating branch 1223, the electric heaters 121 may be connected in series. Of course, in other examples, when a plurality of electric heaters 121 are distributed on one heating branch 1223, the plurality of electric heaters 121 may be connected in series and in parallel at the same time.

In this embodiment, the P point heaters are distributed in the N heating branches 1223, and the N heating branches 1223 can be connected in parallel with the first main circuit 1221 and the second main circuit 1222, so that when part of the N heating branches 1223 are damaged, heating can be carried out through electric heaters 121 connected in other heating branches 1223, thus improving the working reliability of the cell heating assembly 100. At the same time, the arrangement of the N parallel heating branches 1223 is also helpful to improve the overall heating efficiency of the cell heating assembly 100.

According to some embodiments of the present application, as shown in FIG. 1, the Q first supporting parts 111 are arranged in an array in the substrate 110 with a first gap between any two adjacent first supporting parts 111, and at least part of P electric heaters 121 are arranged at the first gap.

The Q first supporting parts 111 are arranged in an array in the substrate 110, and in some examples, the Q first supporting parts 111 may be arranged in a rectangular array. Alternatively, the first supporting parts can be arranged along a circular array on a plurality of concentric circles with different radii. Alternatively, the first supporting parts may be arranged in a hexagonal array, etc., which is not specifically limited here.

The first gap may exist between any two adjacent first supporting parts 111 of the Q first supporting parts 111. For example, when the first supporting parts 111 are openings, the first gap may be a part of the substrate 110. When the first supporting parts 111 are supports, the first gap may exist in the form of a channel.

At least part of the P electric heaters 121 are disposed at the first gap, in other words, all or part of the P electric heaters 121 may be disposed at the first gap.

As shown in FIG. 2, in one example, the electric heater 121 may generally be disposed at the first gap, but around the first supporting part 111 outermost of the array, some of the electric heaters 121 may also be located outside the array of the first supporting part 111, that is, these electric heaters 121 are not located in the first gaps.

In practical use, all of the P electric heaters 121 may be located at the first gaps on the premise that the cells 211 in the respective first supporting parts 111 can be heated.

In this embodiment, at least part of the P electric heaters 121 are arranged at the first gap between the two adjacent first supporting parts 111, which is helpful to distribute the electric heaters 121 on the basics evenly, thereby uniformly heating the cells 211 on each first supporting part 111 and improving the heating effect of the cells 211.

In some embodiments, the electric heaters 121 located in the first gap can avoid the narrowest portion of the first gap, so that increase in the spacing between the first supporting parts 111 due to the arrangement of the electric heaters 121 can be effectively avoided, thereby contributing to reducing the overall size of the cell heating assembly 100.

According to some embodiments of the present application, at least one heating branch 1223 extends in a wavy line.

The heating branch 1223 extends in a wavy line, which may refer to the shape of the heating branches 1223 changing periodically in the length direction.

As shown in FIG. 2, the heating branch 1223 may include a plurality of arc-shaped wires 12231. These arc-shaped wires 12231 are sequentially disposed on the substrate 110 and may be in a discontinuous wavy line shape in the length direction. Here, the arc-shaped wire 12231 may be a flexible wire or a hard PCB embedded in the substrate 110.

In some examples, if the second supporting parts 112 are arc-shaped openings, an arc-shaped wire 12231 in one heating branch 1223 and the second supporting part 112 are connected to each other and may have a continuous wavy line shape in the length direction.

The extension direction of the heating branch 1223 in the wavy line shape can be set as needed. For example, the heating branches 1223 in the wavy line shape may extend along the length direction or the width direction of the substrate 110.

For another example, as shown in FIGS. 1 and 2, the heating branch 1223 in the wavy line shape may extend obliquely on the substrate 110. Specifically, if the first supporting part 111 in the i-th row and the j-th column is designated as (i, j), the heating branch 1223 extending obliquely may pass through the gap between (i, j) and (i, j+1), the gap between (i, j+1) and (i+1, j+1), and the gap between (i+1, j+1) and (i+1, j+2) sequentially. In the heating branch 1223 extending obliquely, the curvature change near the inflection point can be relatively gentle, and accordingly, the heating branches 1223 and the electric heaters 121 can be easily machined. Where i and j are positive integers.

When the Q first supporting parts 111 are arranged in an array on the substrate 110, heating branches 1223 in the wavy line shape can meander in each first gap, and the heating branches 1223 can be relatively close to the first supporting parts 111 as a whole, so that the electric heaters 121 distributed on the heating branches 1223 can also be relatively close to the first supporting parts 111, thereby contributing to improving the heating efficiency of the cells 211.

In addition, the shape of the heating branches 1223 periodically changes in the length direction, so that the shape of the electric heaters 121 distributed in each of the heating branches 1223 also periodically changes, and the shapes of respective electric heaters 121 can be consistent, which is helpful for modular production of the electric heaters 121 and reduces the difficulty of designing and machining the electric heaters 121.

According to some embodiments of the present application, as shown in FIG. 1, the substrate 110 is also provided with at least one air guide hole 130.

The air guide hole 130 may be a blind hole or a through hole, and its cross-sectional shape may be a circular, rectangular opening or in an arc shape and the like, which is not specifically limited herein.

In some examples, the first supporting parts 111 may be openings, and the air guide hole 130 and the first supporting parts 111 may be disposed on the same surface or different surfaces of the substrate 110.

In other examples, when the P first supporting parts 111 are arranged in an array on the substrate 110, the air guide hole 130 may be provided in the gap between the P first supporting parts 111.

When the volume of the cells 211 located in the first supporting parts 111 changes due to a temperature change, the air guide hole 130 can release the stress of the cells 211 acting on the substrate 110, thereby ensuring the safety of the cells 211. At the same time, the arrangement of the air guide hole 130 can also reduce the overall weight of the substrate 110.

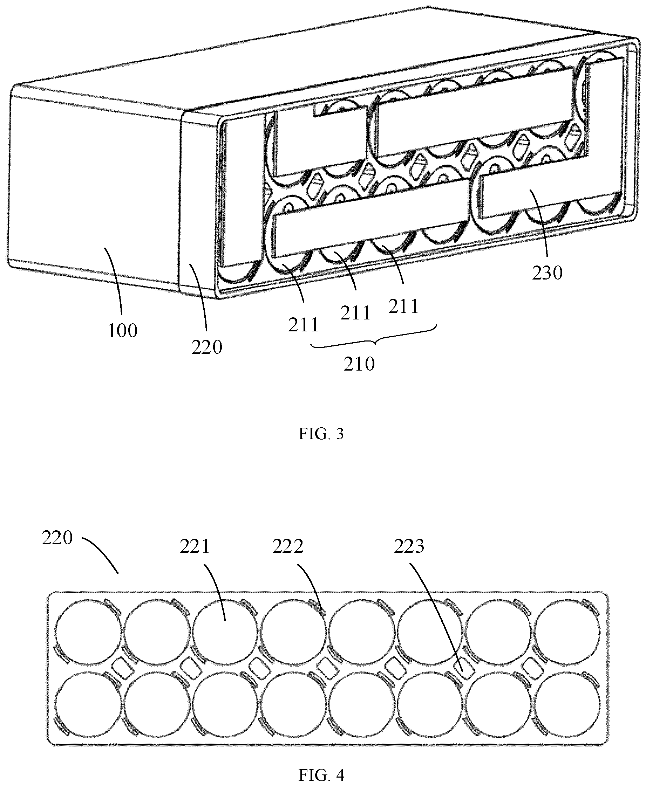

As shown in FIGS. 3 to 5, the embodiment of the present application also provides a battery module 200, which includes a cell assembly 210 and the above-mentioned cell heating assembly 100.

The cell assembly 210 includes Q cells 211, and the Q cells 211 are provided on Q first supporting parts 111 of the cell heating assembly 100.

The cell 211 may be a lithium battery, a sodium ion battery, a magnesium ion battery or the like, and is not specifically limited here.

The cell heating assembly 100 includes a substrate 110, and the Q first supporting parts 111 are provided on the substrate 110. The first supporting parts 111 may be openings, slots, supports, etc., which are not specifically limited here.

In the fact that the first supporting parts 111 are openings, for example, the cells 211 are provided on the first supporting parts 111, and the cells 211 may be embedded in the openings.

In the fact that the first supporting parts 111 are supports, for example, the cells 211 are arranged on the first supporting parts 111, and the cells 211 can be fixed on the supports in other directions by means of snap fit and bonding.

The battery module 200 includes Q cells 211, and each of the cells 211 may be disposed on one first supporting part 111.

The battery module 200 provided in this embodiment includes a cell assembly 210 and the above-mentioned cell heating assembly 100. The cell assembly 210 includes Q cells 211, the Q cells 211 are arranged on Q first supporting parts 111 of the cell heating assembly 100. Thus, respective cells 211 can be synchronously heated by the surrounding electric heaters 121, which is helpful to improve the heating efficiency of the cell assembly 210.

In addition, the battery module 200 is a battery module 200 including the above-mentioned cell heating assembly 100, and the related embodiments of the cell heating assembly 100 are also applicable to the embodiments of the battery module 200 and can achieve the same beneficial effect, which will not be repeated here.

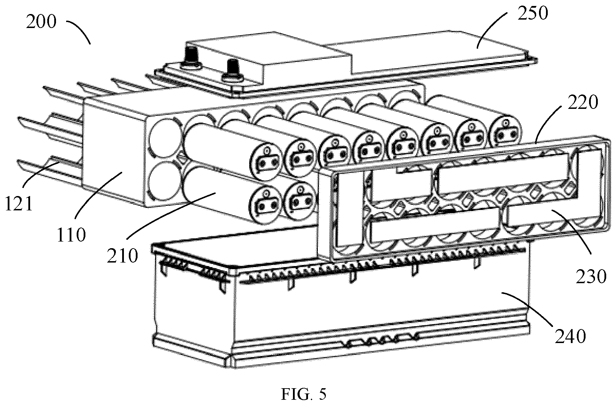

According to some embodiments of the present application, as shown in FIGS. 3 and 5, the cell assembly 210 further includes a bus member 230, and the bus member 230 is used for electrically connecting the electrodes of the Q cells 211.

The bus member 230 may be a conductive structure of materials such as copper, iron, aluminum obtaining other types of materials, and may be used to electrically connect electrodes between different cells 211.

The configuration of the bus member 230 may also be selected as required, for example, it may be a sheet-shaped bar or a configuration of wires and joints or the like.

The bus member 230 may also be fixed in the substrate 110 in advance, for example, it may be embedded or injection molded in the substrate 110. Alternatively, the bus member 230 may exist alone and may be electrically connected to the cell assembly 210, and assembled to the substrate 110 in , synchronization with the cell assembly 210.

The bus member 230 is provided such that the Q cells 211 can be connected in parallel and/or in series, which is helpful to meet the parameter requirements of power devices for battery module 200 in various application scenarios.

According to some embodiments of the present application, as shown in FIGS. 3 and 4, the battery module 200 further includes an end cap 220, and the end cap 220 is fixedly connected to the substrate 110.

The end cap 220 is provided with Q first through holes 221 penetrating a first end face and a second end face, the electrodes of the Q cells 211 penetrate into the Q first through holes 221 from the first end face and are electrically connected with the bus member 230 fixedly connected to the second end face.

The end cap 220 may be made from an insulating material or the end cap 220 may be composed mainly of iron, copper, aluminum or other rigid conductive materials, but the conductive material in the end cap 220 may be connected to the bus member 230 through an insulating layer.

The fixing mode of the end cap 220 to the substrate 110 and the fixing mode of the bus member 230 to the end cap 220 may be fastener connection, snap connection, bonding, nested connection or the like, which are not specifically limited here.

The Q cells 211 are provided on the Q first supporting parts 111 of the substrate, and the Q cells 211 may have protrusions relative to the outer surface of the substrate, and the protruded portions may penetrate into the Q first through holes 221 of the end cap 220.

For example, the first supporting parts 111 may be openings, and the height of the cell 211 may be greater than the depth of the first supporting part 111 such that a portion of the cell 211 is higher than the outer end face of the substrate 110. When the end cap 220 is fixedly connected to the substrate 110, a portion of the cell 211 that is higher than the outer end face of the substrate 110 may extend into the first through hole 221 from the first end face of the end cap 220 and be electrically connected to the bus member 230 provided on the second end face of the end cap 220.

Of course, the first supporting parts 111 may be supports or the like, and when the cells 211 are provided on the supports, the cells may protrude relative to the outer surface of the substrate, so as to protrude into a through hole in the end cap 220 and be electrically connected to the bus member 230.

In this embodiment, the end cap 220 provides an attachment surface for the bus member 230, which helps to reduce the difficulty of arranging the bus member 230. At the same time, the end cap 211 is fixedly connected with the substrate 110, which is helpful to limit respective cells 220 in the corresponding openings and improve the assembly reliability among the cell assembly 210, the substrate 110 and the end cap 220.

According to some embodiments of the present application, as shown in FIG. 4, P second through holes 222 penetrating the first and second end faces are provided in the end cap 220, and P electric heaters 121 in the cell heating assembly 100 penetrate P second through holes 222.

In the present embodiment, in a case where the cell 211 is partially penetrated into the first through hole 221 of the end cap 220, a second through hole 222 is provided in the end cap 220, and the electric heater 121 is partially penetrated into the second through hole. Thus, the relative facing surface between the electric heater 121 and the cell 211 can be enlarged, the electric heater 121 can sufficiently heat the peripheral side of the cell 211, and the heating efficiency of the cell 211 can be improved.

In some embodiments, as shown in FIG. 4, an opening corresponding to the air guide hole 130 may also be provided in the end cap 220, for example, the opening may be a third through hole 223 as shown in FIG. 4. The third through hole 223 is provided to help release stress generated in the end cap 220 and reduce the overall weight of the end cap 220.

According to some embodiments of the present application, the electrical heating loop 120 of the cell heating assembly 100 is electrically connected at a position between a positive electrode of the cell assembly 210 and a negative electrode of the cell assembly 210.

The cell assembly 210 includes Q cells 211, and the positive electrode of the cell assembly 210 may be the total positive electrode after the Q cells 211 are electrically connected, or the positive electrode of some of the cells 211 which are electrically connected. Similarly, the negative electrode of the cell assembly 210 may be the total negative electrode after the Q cells 211 are electrically connected or the negative electrode of some of the cells 211 which are electrically connected.

The electric heating circuit 120 of the cell heating assembly 100 may include an electric heater 121 and a conducting circuit 122 described above, and the electric heater 121 may be connected at a position between the positive electrode and the negative electrode of the cell assembly 210 through a guide line. Thus, in some low temperature applications, the cell assembly in the battery module 200 can heat itself through the electric heating circuit 120, so that the battery module can work at a more suitable temperature, and the working performance of the battery module can be improved.

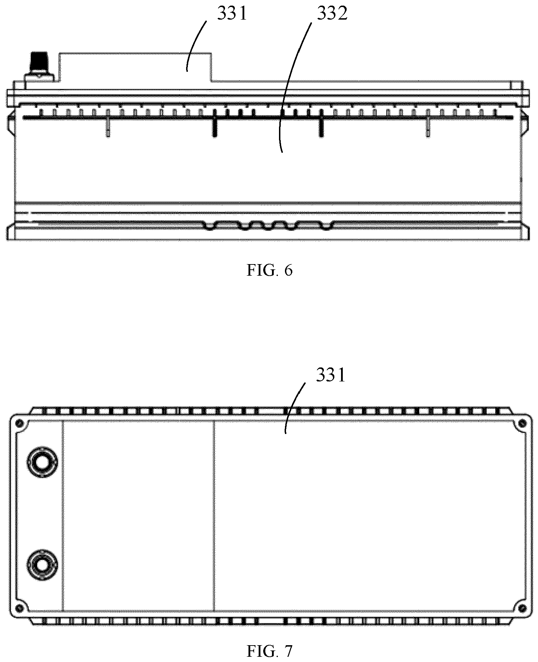

According to some embodiments of the present application, as shown in FIGS. 5 to 7, the battery module 200 further includes a case 240 and a cover 250, the case 240 is provided with an accommodating cavity, and the cover 250 is provided covering the case 240.

The cell heating assembly 100 and the cell assembly 210 are both disposed in the accommodating cavity.

The case 240 is provided with an accommodating cavity which can be used to accommodate the cell heating assembly 100 and the cell assembly 210. Accordingly, the shape of the case 240 or the shape of the accommodating cavity may be matched with the assembled configuration of the cell heating assembly 100 and the cell assembly 210.

For example, the case 240 may be rectangular in shape, and the accommodating cavity is formed by providing a rectangular opening on one end face of the case 240. Of course, in practical applications, the case 240 may also be cylindrical or in other shapes as a whole, and which is not specifically limited here.

The case 240 and the cover 250 may be of a structure having a certain strength.

The cover 250 covers over the case 240 so that the accommodating cavity can be a relatively closed space so as to effectively protect the cell heating assembly 100 and the cell assembly 210.

The cover 250 and the case 240 may be connected by a fastener or by means of clamping, bonding, welding or the like, which is not specifically limited here.

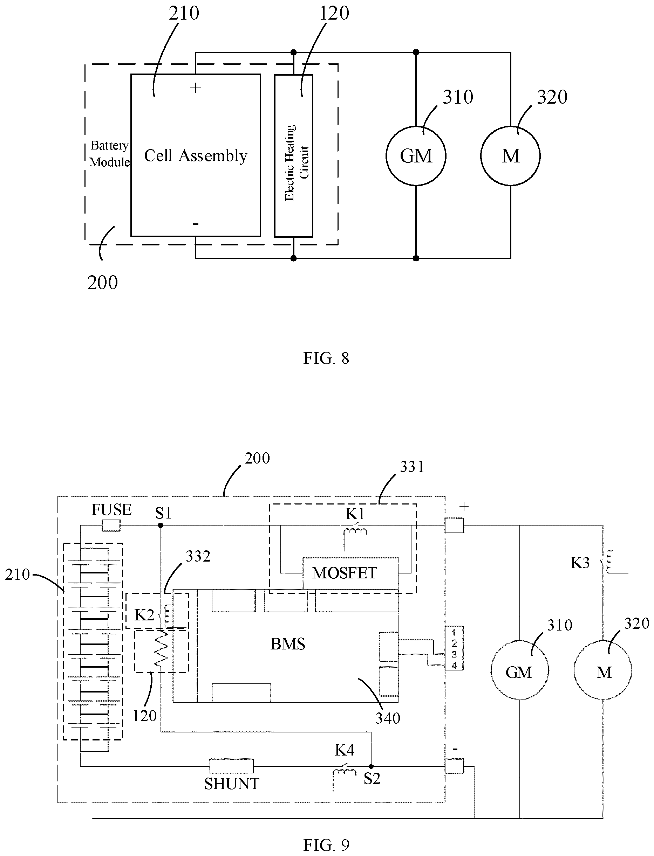

The embodiments of the present application also provide a vehicle. As shown in FIG. 8, the vehicle includes: a generator 310, a starter 320 and the battery module 200 described above.

The generator 310, the starter 320 and the electric heating circuit 120 are connected in parallel at a position between the positive and negative electrodes of the cell assembly 210 of the battery module 200.

The vehicle may be an electric vehicle, an oil-electric hybrid vehicle or other vehicle that can be started based on the battery module 200, which is not specifically limited here.

The starter 320 may be used to convert electrical energy into mechanical energy and may be used to start the engine. Specifically, the starter 320 may be connected at a position between the positive and negative electrodes of the cell assembly 210 to convert electrical energy from the cell assembly 210 into mechanical energy while conducting with the cell assembly 210.

The generator 310 may be used to convert mechanical energy into electrical energy and charge the cell assembly 210.

Of course, a loop may be formed between the generator 310 and the electric heating circuit 120, and the electric energy generated by the generator 310 may also be used to further heat the cell assembly 210.

The vehicle provided in this embodiment includes the generator 310, the starter 320, and the battery module 200. The generator 310, the starter 320, and the electric heating circuit 120 are connected in parallel at a position between a positive electrode and a negative electrode of the cell assembly 210 of the battery module 200. The battery assembly 210 may discharge to the starter 320 to start the vehicle, and in case the vehicle is started, the generator 310 may supply power to the battery assembly 210 or heat the battery assembly 210 through the electric heating circuit 120 to enable the battery assembly 210 to operate at a suitable temperature and improve the operational performance of the battery assembly 210.

In addition, the vehicle includes the above-mentioned battery module 200, and the related embodiment of the battery module 200 is also applicable to the embodiment of the vehicle and can achieve the same beneficial effect, which will not be repeated here.

Combined with an application scenario, when the user starts the whole vehicle, the cell assembly 210 discharges to the starter 320, and the starter 320 works to drive the engine to work, thus driving the generator 310 to work. At this time, the generator 310 discharges the whole vehicle, and the current can flow to the electric heating circuit 120. Thus, when the engine preheats in a low temperature environment, the cell assembly 210 is heated synchronously, so that the cell assembly 210 is at a suitable working temperature.

According to some embodiments of the present application, as shown in FIG. 9, the vehicle further includes a first switch assembly 331 and a second switch assembly 332, the positive electrode of the cell assembly 210 and a first terminal of the first switch assembly 331 are both connected to a first node S1, the second switch assembly 332 and the electric heating circuit 120 are connected in series at a position between the first node S1 and the negative electrode of the cell assembly 210, and the generator 310 and the starter 320 are connected in parallel at a position between a second terminal of the first switch assembly 331 and the negative electrode of the cell assembly 210.

The first switch assembly 331 may include one or more switches, and the switches may be at least one of relays, transistors, or other types of switches, that is, the number and type of switches in the first switch assembly 331 may be combined as desired.

Similarly, the number and type of switches in the second switch assembly 332 may be combined as desired.

The first switch assembly 331 may be thought to be disposed on the main circuit after the generator 310 and the starter 320 are connected in parallel. When the first switch assembly 331 is turned on, the cell assembly 210 may supply power to the starter 320 to start the vehicle. At the same time, the generator 310 may charge the cell assembly 210 after the vehicle is started.

The second switch assembly 332 is connected in series with the electric heating circuit 120. When the second switch assembly 332 is turned on, the electric heating circuit 120 may be powered by the cell assembly 210 or the generator 310, thereby heating the cell assembly 210.

In one application example, when the ambient temperature is lower than a first preset value, the second switch assembly 332 may be turned on and the first switch assembly 331 may be kept off, and the cell assembly 210 may supply power to the electric heating circuit 120 to heat itself. When the temperature of the cell assembly 210 rises to the first preset value, the first switch assembly 331 may be turned on, the vehicle may be started by the starter 320, and the cell assembly 210 may be subsequently charged by the generator 310, while the generator 310 supplies power to the electric heating circuit 120 to continue heating the cell assembly 210.

In another application example, when the ambient temperature is higher than the first preset value, but lower than a second preset value, the first switch assembly 331 and the second switch assembly 332 can be turned on synchronously, and after the vehicle is started, the electric heating circuit 120 is supplied with power through the generator 310 to continue heating the cell assembly 210.

In yet another application example, when the temperature of the cell assembly 210 is heated above the second preset value, the second switch assembly 332 may be controlled to be turned off to stop heating the cell assembly 210.

In yet another application example, when the ambient temperature is higher than the second preset value, the first switch assembly 331 may be turned on, and the second switch assembly 332 may be kept off without heating the cell assembly 210.

It can be seen that in this embodiment, the heating requirements of the cell assembly 210 under different ambient temperatures can be met by arranging the first switch assembly 331 and the second switch assembly 332.

According to some embodiments of the present application, when the ambient temperature is lower than the first preset value or the second preset value, the internal impedance of the cell 211 may be used for preheating in addition to the cell assembly 210 by the electric heating circuit 120.

In other words, in this embodiment, heating can be performed simultaneously inside and outside the cell 211, which effectively improves the heating efficiency of the cell assembly 210.

According to some embodiments of the present application, as shown in FIG. 9, the vehicle further includes a Battery Management System (BMS) 340, and the BMS electrically connects the first switch assembly 331 and the second switch assembly 332.

Generally, the BMS may be used to manage batteries in a vehicle such as monitoring the output voltage, state of charge and the like of the cell assembly 210 described above, which is not specifically described here.

In the present embodiment, the BMS is electrically connected with the first switch assembly 331 and the second switch assembly 332 to control the switching states of these switch assemblies, thereby avoiding the introduction of additional control modules in the vehicle and further reducing the vehicle configuration cost.

According to some embodiments of the present application, as shown in FIG. 9, the present application provides a vehicle including the cell assembly 210, the electrical heating circuit 120, the BMS, the generator 310, and the starter 320. The cell assembly 210, the electric heating circuit 120 and the BMS may all be components of the battery module 200. The electric heating circuit 120, the generator 310, and the starter 320 are connected in parallel with each other.

A FUSE is provided between the positive electrode of the cell assembly 210 and the first node S1. A shunt resistor SHUNT and a fourth switch K4 are connected in series at a position between the negative electrode of the cell assembly 210 and the second node S2. The electric heating circuit 120 is connected in series with a second switch K2 between the first Node S1 and the second node S2, where the second switch K2 corresponds to the second switch assembly 332 described above.

The battery module 200 may have a positive interface (+) and a negative interface (-), the first switch assembly 331 may be provided between the first node S1 and the positive interface, and the second node S2 may be directly connected to the negative interface.

The first switch assembly 331 may include a first switch K1 and a switch transistor MOSFET in parallel, and the first switch K1 may be a switch structure such as a relay. In other words, the first switch assembly 331 may be obtained by a plurality of types of switch configurations in parallel and the operational reliability of the battery module 200 is enhanced by a redundant configuration.

In one example, the on-off of the first switch assembly 331, the second switch K2 and the fourth switch K4 may all be controlled by the BMS.

The generator 310 and the starter 320 may be connected in parallel between the positive interface and the negative interface. A third switch K3 connected in series with the starter 320 is arranged on the branch where the starter 320 is located. When the vehicle is started, the third switch K3 may be closed, and after the vehicle is started, the third switch K3 may be disconnected.

Finally, it should be explained that the above embodiments are only used to illustrate the technical solution of the present application, not to limit it. Although the present application has been described in detail with reference to the foregoing embodiments, it should be understood by those of ordinary skill in the art that the technical solution described in the foregoing embodiments can still be modified or some or all of the technical features thereof can be equivalently substituted. However, these modifications or substitutions do not depart the essence of the corresponding technical solution from the scope of the technical solution of each embodiment of the present application, and should be covered in the scope of the claims and descriptions of the present application. In particular, the various technical features mentioned in the various embodiments may be combined in any manner so long as there is no structural conflict. The present application is not limited to the specific embodiments disclosed herein but includes all technical solutions falling within the scope of the claims.

## Claims

1. A cell heating assembly, comprising:
a substrate provided with Q first supporting parts and P second supporting parts, each first supporting part being used for supporting one cell;
an electric heating circuit comprising P electric heaters and a conducting circuit, wherein the conducting circuit is electrically connected with the P electric heaters; the P electric heaters and the conducting circuit are arranged on the substrate; each second supporting part is used for supporting one electric heater; and at least one electric heater and second supporting part are arranged around each first supporting part; and
P and Q are integers greater than 1.

2. The cell heating assembly according to claim 1, wherein the conducting circuit is embedded in the substrate, and the conducting circuit passes through the second supporting parts and is electrically connected with the electric heaters.

3. The cell heating assembly according to claim 1, wherein the conducting circuit is a printed circuit board circuit.

4. The cell heating assembly according to claim 1, wherein the second supporting parts are arc-shaped openings;
the first supporting parts are circular openings; and
the second supporting parts arranged around the first supporting parts are arranged concentrically with the first supporting parts.

5. The cell heating assembly according to claim 1, wherein the conducting circuit comprises a first main circuit, a second main circuit and N heating branches, where N is an integer greater than 1; and
the P electric heaters are distributed in the N heating branches, and the N heating branches are connected in parallel between the first main circuit and the second main circuit.

6. The cell heating assembly according to claim 5, wherein Q first supporting parts are arranged in an array in the substrate with a first gap between any two adjacent first supporting parts, and at least part of P electric heaters are arranged at the first gap.

7. The cell heating assembly according to claim 5, wherein at least one heating branch extends in a wavy line.

8. The cell heating assembly according to claim 1, wherein the substrate is further provided with at least one air guide hole.

9. A battery module, comprising: a cell assembly and the cell heating assembly according to any one of claims 1 to 8, wherein the cell assembly comprises Q cells, and the Q cells are arranged on Q first supporting parts of the cell heating assembly.

10. The battery module according to claim 9, wherein the cell assembly further comprises a bus member for electrically connecting electrodes of the Q cells.

11. The battery module according to claim 10, wherein the battery module further comprises an end cap fixedly connected with the substrate; and
Q first through holes penetrating a first end face and a second end face are provided in the end cap, the electrodes of the Q cells penetrate into the Q first through holes from the first end face and are electrically connected with the bus member fixedly connected to the second end face.

12. The battery module according to claim 11, wherein P second through holes penetrating the first end face and the second end face are provided in the end cap, and P electric heaters in the cell heating assembly penetrate the P second through holes.

13. The battery module according to claim 9, wherein electric heating circuit of the cell heating assembly is electrically connected at a position between a positive electrode of the cell assembly and a negative electrode of the cell assembly.

14. The battery module according to claim 9, wherein the battery module further comprises a case provided with an accommodating cavity, and a cover provided covering the case; and
wherein the cell heating assembly and the cell assembly are arranged in the accommodating cavity.

15. A vehicle, comprising: a generator, a starter, and the battery module according to any one of claims 9 to 14,
wherein the generator, the starter and an electric heating circuit are connected in parallel between a positive electrode and a negative electrode of a cell assembly of the battery module.

16. The vehicle according to claim 15, wherein the vehicle further comprises a first switch assembly and a second switch assembly, the positive electrode of the cell assembly and a first terminal of the first switch assembly are connected to a first node, the second switch assembly and the electric heating circuit are connected in series at a position between the first node and the negative electrode of the cell assembly, and the generator and the starter are connected in parallel at a position between a second terminal of the first switch assembly and the negative electrode of the cell assembly.

17. The vehicle according to claim 16, wherein the vehicle further comprises a battery management system electrically connected to the first switch assembly and the second switch assembly.
